(19) Europäisches Patentamt — European Patent Office — Office européen des brevets

(11) **EP 4 738 653 A1**

(12) **EUROPEAN PATENT APPLICATION**

(43) Date of publication:
06.05.2026 Bulletin 2026/19

(21) Application number: 25208919.8

(22) Date of filing: 15.10.2025

(51) International Patent Classification (IPC):
H02K 1/14 (2006.01)    B25J 11/00 (2006.01)
H02K 1/16 (2006.01)    H02K 1/27 (2022.01)
H02K 1/2706 (2022.01)    H02K 1/272 (2022.01)
H02K 1/2753 (2022.01)    H02K 1/278 (2022.01)

(52) Cooperative Patent Classification (CPC):
B25J 9/126; H02K 1/02; H02K 1/146; H02K 21/16;
H02K 2213/03

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 30.10.2024 JP 2024191178

(71) Applicant: Sumitomo Heavy Industries, Ltd.
Tokyo 141-6025 (JP)

(72) Inventor: MORITANI, Koji
Kanagawa, 237-8555, (JP)

(74) Representative: Louis Pöhlau Lohrentz
Patentanwälte
Postfach 30 55
90014 Nürnberg (DE)

(54) **MOTOR AND ROBOT INCLUDING MOTOR**

(57) An object of the present invention is to provide a motor (100) advantageous for cost reduction while suppressing performance degradation. A motor (100) includes a stator (2) including an iron core (21) having a plurality of teeth (22) and a plurality of slots (24) extending in a radial direction, and a winding wire (25) wound around each of the slots (24), and a rotor (3) including a magnet (32) including magnetic poles (33) facing the plurality of teeth (22) in the radial direction. The iron core (21) is integrally formed in a circumferential direction, and the magnet (32) is formed of a material having a residual magnetic flux density of 1.4 T or more, and an iron core utilization rate of the iron core (21) is less than 60%.

FIG. 1

IRON CORE UTILIZATION RATE = AREA C/(AREA C + AREA S) × 100%

**Description**

BACKGROUND OF THE INVENTION

Field of the Invention

The present invention relates to a motor and a robot including the motor.

Description of Related Art

A motor including a rotor and a stator is known. For example, International Publication No. 2022/019074 describes an electric motor including a rotor having a permanent magnet and a stator having teeth disposed to face the rotor. The rotor of the electric motor includes an iron core and a permanent magnet disposed in an insertion hole of the iron core, and a residual magnetic flux density of the permanent magnet is 1.3 T or more.

SUMMARY OF THE INVENTION

The inventor has obtained the following recognition. There is a need for a motor that is small-sized, satisfies desired performance, and can be cost-reduced. To improve the torque performance, it is conceivable to perform high-density winding by manual winding. However, this method is high in cost because the method cannot be automated. In addition, to realize the high-density winding, it is conceivable to adopt a split core in which an iron core is split into a plurality of pieces for each tooth. However, in this method, post-processes such as connection work after winding are increased, and dedicated equipment is used. Therefore, this method results in high costs. In addition, in a multi-pole multi-slot specification, a core back, which is a connecting portion of the split core, is narrowed. As a result, assembling performance degrades. In addition, to accurately assemble the iron core, a cutting process of the core after connection is added, which results in high costs.

In a motor configuration of the related art, there is a problem in that when the density of a winding wire is reduced to reduce costs, the performance degrades. From these, in the motor of the related art, it is insufficient from the viewpoint of providing a motor advantageous for cost reduction while suppressing performance degradation.

The present invention has been made in view of such a problem, and an object of the present invention is to provide a motor advantageous for cost reduction while suppressing performance degradation.

To solve the above problem, a motor according to an aspect of the present invention includes: a stator including an iron core having a plurality of teeth and a plurality of slots extending in a radial direction, and a winding wire wound around each of the slots; and a rotor including a magnet having magnetic poles facing the plurality of teeth in the radial direction. The iron core is integrally formed in a circumferential direction, the magnet is formed of a material having a residual magnetic flux density of 1.4 T or more, and an iron core utilization rate of the iron core is less than 60%.

According to another aspect of the invention, there is provided a robot. The robot includes the motor.

Note that, any combination of the above components, and those obtained by substituting the components or expressions in the present invention with each other between methods, systems, or the like are also effective as aspects of the present invention.

According to the present invention, it is possible to provide the motor advantageous for cost reduction while suppressing performance degradation.

BRIEF DESCRIPTION OF THE DRAWINGS

FIG. 1 is a cross-sectional view obtained by cutting a motor of a first embodiment taken along a plane perpendicular to an axial direction.
FIG. 2 is a side view showing a robot according to a second embodiment.

DETAILED DESCRIPTION OF THE INVENTION

Hereinafter, the present invention will be described with reference to each drawing based on preferred embodiments. In the embodiments and modification examples, the same or equivalent components and members will be represented by the same reference numerals and duplicate descriptions will be appropriately omitted. In addition, the dimensions of members in each drawing have been appropriately enlarged and reduced for easy understanding. In addition, in each drawing, some of the members not important for the description of the embodiments are not shown. In addition, when the same or equivalent components are described to be distinguished from each other, the description will be made with capital letters such as A, B, and C added to the ends of the reference numerals.

In addition, although terms including ordinal numbers such as "first" and "second" will be used to describe various components, the terms will be used only for the purpose of distinguishing one component from the other component and no component is limited by the terms.

[First Embodiment]

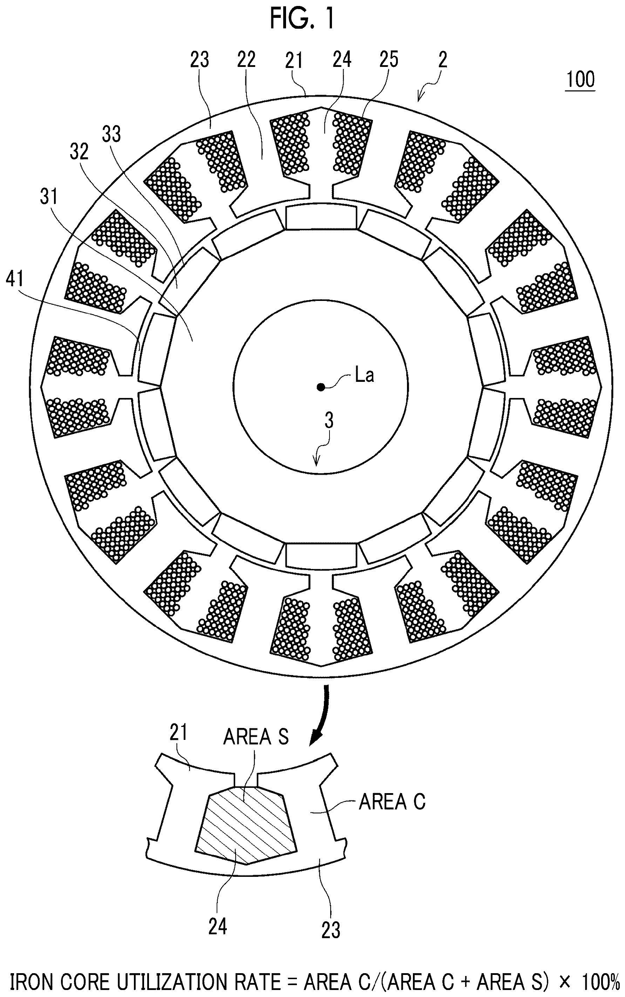

A motor 100 according to a first embodiment of the present invention will be described with reference to FIG. 1. FIG. 1 is a cross-sectional view of the motor 100. This figure is a cross-sectional view cut taken along a plane perpendicular to a rotation axis La of a rotor 3 of the motor 100.

Hereinafter, a direction parallel to the rotation axis La is referred to as an "axial direction", and a circumferential direction and a radial direction of a circle centered on the rotation axis La are referred to as a "circumferential direction" and a "radial direction", respectively.

The motor 100 includes the rotor 3 and the stator 2. The motor 100 may be any motor having the rotor 3 and the stator 2, and in this example, the motor 100 is a radial gap type inner rotor motor. The motor 100 may be an outer rotor motor. As an example, the motor 100 is preferably used for driving a joint of a robot.

The stator 2 includes an annular core back 23 surrounding the rotation axis La, a plurality of teeth 22 extending in the radial direction from the core back 23, and an iron core 21 having a plurality of slots 24 formed between two adjacent teeth 22.

The plurality of teeth 22 are disposed at predetermined intervals in the circumferential direction. The number of teeth 22 may be a multiple of 3, but is preferably 9 or more from the viewpoint of ensuring performance, and is 12 in this example. The number of teeth 22 is preferably 18 or fewer from the viewpoint of ensuring productivity.

The iron core 21 is a non-split core integrally formed in the circumferential direction. The iron core 21 is formed by laminating a predetermined number of electromagnetic steel sheets such as silicon steel sheets, which are punched out by a press, in the axial direction and performing insulation treatment or the like.

The stator 2 includes a winding wire 25 wound around a slot 24. In this example, the winding wire 25 is formed by so-called nozzle winding in which an electric wire is supplied from the tip of a nozzle that rotates around a tooth 22 and is wound around the tooth 22. As an example, the winding wire 25 is three-phase star-connected.

The rotor 3 includes a hollow cylindrical rotor cylinder portion 31 surrounding the rotation axis La, and a magnet 32 secured to an outer periphery of the rotor cylinder portion 31. The rotor 3 is supported to be rotatable around the rotation axis La by bearing means (not shown). A plurality of magnetic poles 33 are provided on the outer peripheral surface of the magnet 32, which faces the stator 2, by magnetization. Although there is a known combination of the number of teeth and the number of magnetic poles, the number of magnetic poles 33 in this example is 14. This combination has relatively small cogging. Since the rotor 3 of this example is a surface magnet type, the magnetic flux from the magnet 32 can be directly guided to the teeth 22, which is advantageous in achieving high performance.

The magnet 32 of this example is 14 segment magnets split for each magnetic pole. In this case, a relatively high magnetic force is easily obtained. The magnet 32 may be an annular magnet integrally formed in the circumferential direction. In this case, assembling is relatively easy. The rotor cylinder portion 31 is formed of a magnetic material and functions as a back yoke of the magnet 32. The magnet 32 is surrounded by the iron core 21 with a radial gap 41 interposed therebetween. The radial gap 41 is also referred to as a radial gap.

An iron core utilization rate of the iron core 21 will be described. Hereinafter, unless otherwise specified, the "area" refers to a cross-sectional area when viewed from the axial direction. In the motor of the related art, the circumferential width of a tooth and the radial width of the core back 23 are increased, and the iron core utilization rate is set to 70% or more. However, in the motor 100 of the embodiment, the iron core utilization rate is set to less than 60% (hereinafter, referred to as an "iron core utilization rate condition"). In this case, the area of the slot 24 is relatively expanded, and the aligned winding of the winding wire 25 is easily realized. The iron core utilization rate can be calculated by Equation 1.

Iron core utilization rate R = Area C/(Area C + Area S) $\times$ 100%  (Equation 1)

The area C is the total area of the iron core 21, and the area S is the total area of the slot 24.

The residual magnetic flux density of the magnet 32 will be described. Hereinafter, unless otherwise specified, the "residual magnetic flux density" refers to the residual magnetic flux density of a material that constitutes the magnet 32. In the motor of the related art, a magnet having a residual magnetic flux density of 1.3 T or less is used. However, in the motor 100 of the embodiment, the residual magnetic flux density of the magnet 32 is 1.4 T or more (hereinafter, referred to as a "residual magnetic flux density condition"). In this case, the magnetic flux linkage of the winding wire 25 increases.

Therefore, even when the residual magnetic flux density condition is combined with the iron core utilization rate condition, it is easy to ensure the torque performance.

The packing factor of the winding wire 25 will be described. Hereinafter, unless otherwise specified, the "packing factor" refers to the ratio of the effective cross-sectional area of a winding wire to the area of a slot. In the motor of the related art, the packing factor is set to 40% or more to ensure performance. This can be easily realized by a split core. However, in the non-split core that is integral in the circumferential direction, the only option is to use low-productivity manual winding or the like, which has been an obstacle to cost reduction. In the motor 100 of the embodiment, the packing factor of the winding wire 25 is set to less than 40% (hereinafter, referred to as a "packing factor condition"). More preferably, the packing factor condition may be set to 30% or less. In this case, even an integral core that is not split in the circumferential direction can form the winding wire 25 by using the nozzle winding described above or flyer winding. Therefore, it is easy to achieve cost reduction by automation. Even when the packing factor condition is combined with the iron core utilization rate condition and the residual magnetic flux density condition, the performance can be ensured, which is also advantageous for achieving cost reduction.

The radial gap 41 between the magnet 32 and the teeth 22 will be described. Hereinafter, unless otherwise specified, the "radial gap" refers to a difference in radius between the magnet and the teeth. In the motor of the related art, the radial gap is set to 2% or more of the outer diameter of the stator. In this case, the magnetic resistance of the radial gap is large, and the performance of the magnet cannot be sufficiently exhibited.

In the motor 100 of the embodiment, the radial gap 41 between the magnet 32 and the teeth 22 is set to a value larger than 0.4% and smaller than 1% of the outer diameter of the stator 2 (hereinafter, referred to as a "radial gap condition"). For example, in a case where the outer diameter of the stator 2 is 50 mm, the radial gap 41 can be set to a value larger than 0.2 mm and smaller than 0.5 mm, which is a value larger than 0.4% and smaller than 1% of 50 mm. In this case, the magnetic resistance of the radial gap is reduced, the permeance coefficient is increased, and the performance of the magnet can be easily exhibited. By combining the radial gap condition with the iron core utilization rate condition, the residual magnetic flux density condition, and the packing factor condition, it is possible to easily ensure desired performance while achieving cost reduction.

The surface magnetic flux density of a magnetic pole will be described. In the motor of the related art, the maximum value of the surface magnetic flux density of the magnetic pole is set to 0.9 T or less in a state where the magnet faces the teeth. However, in the motor 100 of the embodiment, the maximum value of the surface magnetic flux density of the magnetic pole 33 is 1.1 T or more in a state where the magnet 32 faces the teeth 22 (hereinafter, referred to as a "surface magnetic flux density condition"). In this case, since the magnetic flux linkage of the winding wire 25 increases, the torque performance is easily ensured even when combined with each of the above-described configuration conditions. The surface magnetic flux density condition can be realized by adjusting the permeance coefficient of a magnetic circuit of the magnet 32.

The operation of the motor 100 of the embodiment will be described. In the motor 100, the rotor 3 is rotated by the torque generated based on a drive principle of a known brushless motor. In the motor 100, when a 3-phase drive current is supplied to the winding wire 25 from a drive circuit (not shown), a rotating magnetic field is generated on the inner periphery of the iron core 21. The torque is generated in the rotor 3 with respect to the stator 2 by the interaction between the rotating magnetic field and the magnetic field of the magnetic poles 33 of the magnet 32, and the rotor 3 is rotated by the torque.

The features of the motor 100 of the first embodiment will be described. The motor 100 includes the stator 2 including the iron core 21 having the plurality of teeth 22 and the plurality of slots 24 extending in the radial direction, and the winding wire 25 wound around the slot 24, and the rotor 3 including the magnet 32 having the magnetic poles 33 facing the plurality of teeth 22 in the radial direction. The iron core 21 is integrally formed in the circumferential direction, and the magnet 32 is formed of a material having a residual magnetic flux density of 1.4 T or more, and the iron core utilization rate of the iron core 21 is less than 60%.

According to this configuration, compared to the split core, a process of connecting cores to each other after winding is not required, and post-processes such as the connection of the winding wire 25 are facilitated, which are advantageous for cost reduction. In addition, since the iron core 21 has a relatively high strength by being integrated, even when the width of the core back or the teeth is reduced to set the iron core utilization rate to less than 60%, the iron core is less likely to be deformed, and high accuracy is easily ensured. By reducing the iron core utilization rate, the slot is widened, the winding wire is aligned to make winding easier, and the number of substantial winding wires can be increased. By combining the magnet 32 having the residual magnetic flux density of 1.4 T or more with such a stator, the performance degradation can be minimized. As a result, it is possible to provide a motor advantageous for cost reduction while suppressing the performance degradation. The iron core utilization rate is preferably 40% or more.

As an example, in the motor 100, the packing factor of the winding wire 25 in the slot 24 is 30% or less. In this case, compared to a case where the packing factor is high, the amount of winding wires is reduced and the productivity is improved, which are advantageous for cost reduction. Even when the packing factor is low, the performance degradation can be minimized by combining the magnets 32 having the residual magnetic flux density of 1.4 T or more. In addition, since the clearance in the slot is increased, the productivity is improved because the nozzle for winding can easily pass through, and the winding wire is further aligned. The winding wire is aligned, so that the winding resistance is reduced, which is advantageous for improving the performance. The packing factor is preferably 20% or more.

As an example, in the motor 100, the radial gap 41 between the magnet 32 and the teeth 22 is less than 1% of the outer diameter of the stator 2. In this case, the magnetic resistance when viewed from the magnet 32 is reduced, and the magnetic flux density of the radial gap 41 is increased to a level close to the residual magnetic flux density, which is more advantageous for improving the performance than in a case where the radial gap 41 is large. As a result, even in a case where the iron core utilization rate is less than 60% and the packing factor is 30% or less, the performance degradation can be minimized. The radial gap 41 is preferably 0.1 mm or more. The outer diameter of the stator 2 is the diameter of a cylinder that circumscribes the stator 2.

As an example, in the motor 100, the maximum value of the surface magnetic flux density of the magnetic pole 33 is 1.1 T or more in a state where the magnet 32 faces the teeth 22. This is advantageous for improving the performance than in a case where the surface magnetic flux density is low. In particular, even when the iron core utilization rate is less than 60% and the packing factor is 30% or less, the performance degradation can be minimized.

As an example, the motor 100 has an inner rotor structure in which the rotor 3 is surrounded by the stator 2, and has a frameless structure in which an outer peripheral surface of the iron core 21 is an outer peripheral surface of the motor 100. In this case, since no frame is provided, the motor 100 can be easily incorporated into mounting equipment such as a robot on which the motor 100 is mounted.

As an example, in the motor 100, the number of teeth 22 is 12, the number of magnetic poles 33 is 14, and the magnet 32 has a segment structure split for each magnetic pole. In this case, since the number of teeth is relatively small, winding can be performed at a high density, and the productivity can be improved compared to a case where the number of teeth is large.

The above is the description of the first embodiment.

[Second Embodiment]

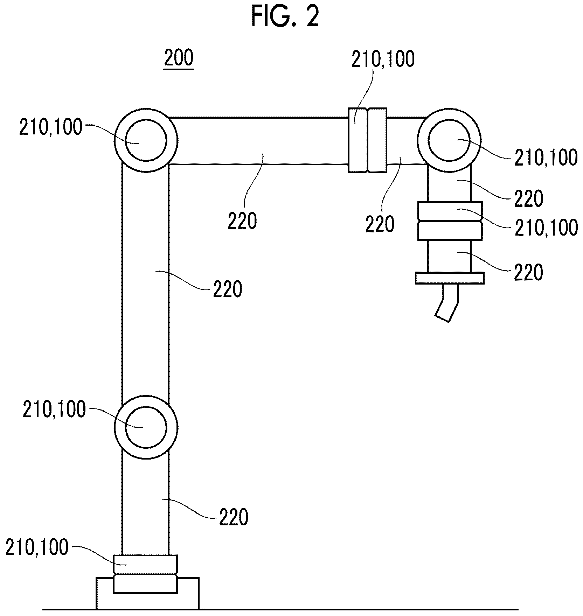

A configuration of a robot 200 according to a second embodiment will be described with reference to FIG. 2. FIG. 2 is a side view schematically showing the robot 200 according to the present embodiment. The robot 200 is an articulated robot having a plurality of arms connected between a tip end side and a base end side via a plurality of joints. The robot 200 of the present embodiment has six joints 210 and six arms 220. The motor 100 of the first embodiment is incorporated into each joint 210. As the rotor 3 of the motor 100 rotates, an arm 220 rotates around a joint 210, and the robot 200 executes a predetermined operation.

The present invention has been described above based on the embodiments. These are examples, and it will be understood by those skilled in the art that various modifications and changes can be made within the scope of the claims of the present invention, and such modification examples and changes are also within the scope of the claims of the present invention. Therefore, the descriptions and the drawings in the present specification should be treated as illustrative, not limiting.

Hereinafter, other modification examples will be described. In the descriptions and the drawings, the same or equivalent components and members as those in the first embodiment are denoted by the same reference numerals. Descriptions overlapping with the above descriptions will be appropriately omitted, and configurations different from the above descriptions will be described with emphasis.

In the descriptions of the embodiments, an example in which the rotor 3 is a surface magnet type has been shown. However, the present invention is not limited thereto. The rotor may be a buried magnet type.

In the descriptions of the embodiments, an example in which the winding wire 25 is formed by the nozzle winding has been shown. However, the present invention is not limited thereto. For example, a winding wire may be formed by a so-called flyer winding.

In the descriptions of the embodiments, an example in which the winding wire 25 is wound in alignment has been shown in FIG. 1. However, the present invention is not limited thereto. For example, a winding wire may be wound by so-called "bale winding". The bale winding is a disposition in which a winding wire on an upper layer is housed in a recessed portion formed between the winding wire on the upper layer and a winding wire on a lower layer.

In the descriptions of the embodiments, an example in which the rotor 3 is hollow has been shown. However, the present invention is not limited thereto.

For example, the rotor may include a shaft at a rotation center.

Each of these modification examples has the same functions and effects as those of the first embodiment.

Any combination of the above-described respective embodiments and modification examples are also useful as embodiments of the present invention. The new embodiments generated by the combinations have the combined effects of the embodiments and the modification examples combined with each other.

Brief Description of the Reference Symbols

2: Stator
3: Rotor
21: Iron core
22: Teeth
23: Core back
24: Slot
25: Winding wire
31: Rotor cylinder portion
32: Magnet
33: Magnetic pole
41: Radial gap
100: Motor
200: Robot

## Claims

1. A motor (100) comprising:

   a stator (2) including an iron core (21) having a plurality of teeth (22) and a plurality of slots (24) extending in a radial direction, and a winding wire (25) wound around each of the slots (24); and
   a rotor (3) including a magnet (32) having magnetic poles (33) facing the plurality of teeth (22) in the radial direction,
   wherein the iron core (21) is integrally formed in a circumferential direction,
   the magnet (32) is formed of a material having a residual magnetic flux density of 1.4 T or more, and
   an iron core (21) utilization rate of the iron core (21) is less than 60%.

2. The motor (100) according to claim 1,
   wherein a packing factor of the winding wire (25) in the slot (24) is 30% or less.

3. The motor (100) according to claim 2,
   wherein a radial gap (41) between the magnet (32) and the teeth (22) is less than 1% of an outer diameter of the stator (2).

4. The motor (100) according to claim 3,
   wherein a maximum value of a surface magnetic flux density of each of the magnetic poles (33) in a state where the magnet (32) faces the teeth (22) is 1.1 T or more.

5. The motor (100) according to claim 4,

   wherein the motor (100) has an inner rotor structure in which the rotor (3) is surrounded by the stator (2), and has a frameless structure in which an outer peripheral surface of the iron core (21) is an outer peripheral surface of the motor (100).

6. The motor (100) according to claim 5,

   wherein the number of the teeth (22) is 12,
   the number of the magnetic poles (33) is 14, and
   the magnet (32) has a segment structure split for each magnetic pole.

7. A robot (200) comprising:
   the motor (100) according to claim 1.

## FIG. 1

IRON CORE UTILIZATION RATE = AREA C/(AREA C + AREA S) × 100%

# FIG. 2

Europäisches
Patentamt

European
Patent Office

Office européen
des brevets

# EUROPEAN SEARCH REPORT

**Application Number**

EP 25 20 8919

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 134 707 A (PANASONIC IP MAN CO LTD) 16 May 2023 (2023-05-16) | 1,6,7 | INV. H02K1/14 |
| Y | * paragraph [0005]; figures 1-3 * <br> * paragraph [0010] - paragraph [0012] * <br> * paragraph [0028] - paragraph [0059] * <br> * paragraph [0126] * | 2-5 | B25J11/00 <br> H02K1/16 <br> H02K1/27 <br> H02K1/2706 <br> H02K1/272 |
| | ----- | | H02K1/272 |
| Y | US 2023/124308 A1 (PAN YUNZHE [CN]) 20 April 2023 (2023-04-20) | 3 | H02K1/2753 <br> H02K1/278 |
| A | * paragraph [0002]; figures 1-16 * <br> * paragraph [0015] - paragraph [0020] * <br> * paragraph [0060] * | 1,6,7 | |
| | ----- | | |
| Y | US 2017/047792 A1 (KLASSEN JAMES BRENT [CA] ET AL) 16 February 2017 (2017-02-16) | 2,5 | |
| A | * paragraph [0236]; claim 29; figures 1-199 * <br> * paragraph [0253] * <br> * paragraph [0302] * <br> * paragraph [0574] * <br> * paragraph [0682] * | 7 | |
| | ----- | | **TECHNICAL FIELDS SEARCHED (IPC)** |
| Y | JP 2021 069223 A (NASHIKI MASAYUKI) 30 April 2021 (2021-04-30) <br> * paragraph [0055]; figures 1-35 * | 4 | B25J <br> H02K |
| | ----- | | |
| A | CN 108 886 276 A (MITSUBISHI ELECTRIC CORP) 23 November 2018 (2018-11-23) <br> * the whole document * | 1 | |
| | ----- | | |

The present search report has been drawn up for all claims

| Place of search | Date of completion of the search | Examiner |
|---|---|---|
| Munich | 17 March 2026 | Roussel, Maxime |

EPO FORM 1503 03.82 (P04C01)

## ANNEX TO THE EUROPEAN SEARCH REPORT
## ON EUROPEAN PATENT APPLICATION NO.

EP 25 20 8919

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2026

| Patent document cited in search report | | Publication date | Patent family member(s) | | Publication date |
|---|---|---|---|---|---|
| CN 116134707 | A | 16-05-2023 | CN | 116134707 A | 16-05-2023 |
| | | | EP | 4187759 A1 | 31-05-2023 |
| | | | JP | WO2022019074 A1 | 27-01-2022 |
| | | | US | 2023253838 A1 | 10-08-2023 |
| | | | WO | 2022019074 A1 | 27-01-2022 |
| US 2023124308 | A1 | 20-04-2023 | CN | 111490611 A | 04-08-2020 |
| | | | CN | 111509874 A | 07-08-2020 |
| | | | CN | 111725906 A | 29-09-2020 |
| | | | CN | 212323825 U | 08-01-2021 |
| | | | CN | 212323826 U | 08-01-2021 |
| | | | CN | 212323827 U | 08-01-2021 |
| | | | US | 2023124308 A1 | 20-04-2023 |
| | | | WO | 2021139454 A1 | 15-07-2021 |
| | | | WO | 2021139455 A1 | 15-07-2021 |
| US 2017047792 | A1 | 16-02-2017 | AU | 2016304787 A1 | 05-04-2018 |
| | | | CA | 2995286 A1 | 16-02-2017 |
| | | | CA | 3034707 A1 | 15-02-2018 |
| | | | CN | 108028554 A | 11-05-2018 |
| | | | CN | 109690911 A | 26-04-2019 |
| | | | CN | 113078749 A | 06-07-2021 |
| | | | EP | 3335299 A1 | 20-06-2018 |
| | | | EP | 3497779 A1 | 19-06-2019 |
| | | | JP | 6848050 B2 | 24-03-2021 |
| | | | JP | 2018529302 A | 04-10-2018 |
| | | | JP | 2019528666 A | 10-10-2019 |
| | | | KR | 20180093872 A | 22-08-2018 |
| | | | KR | 20190034659 A | 02-04-2019 |
| | | | RU | 2018108629 A | 12-09-2019 |
| | | | US | 2017047792 A1 | 16-02-2017 |
| | | | US | 2017047793 A1 | 16-02-2017 |
| | | | US | 2017047794 A1 | 16-02-2017 |
| | | | US | 2017047795 A1 | 16-02-2017 |
| | | | US | 2017047798 A1 | 16-02-2017 |
| | | | US | 2017047821 A1 | 16-02-2017 |
| | | | US | 2017126079 A1 | 04-05-2017 |
| | | | US | 2017133891 A1 | 11-05-2017 |
| | | | US | 2017187254 A1 | 29-06-2017 |
| | | | US | 2020144880 A1 | 07-05-2020 |
| | | | US | 2020161912 A1 | 21-05-2020 |
| | | | US | 2021273509 A1 | 02-09-2021 |
| | | | WO | 2017024409 A1 | 16-02-2017 |
| | | | WO | 2018027330 A1 | 15-02-2018 |
| JP 2021069223 | A | 30-04-2021 | JP | 7406739 B2 | 28-12-2023 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 20 8919

17-03-2026

| Patent document cited in search report | Publication date | Patent family member(s) | | Publication date |
|---|---|---|---|---|
| | | JP | 2021069223 A | 30-04-2021 |
| | | US | 2023231425 A1 | 20-07-2023 |
| | | WO | 2021079577 A1 | 29-04-2021 |
| CN 108886276 A | 23-11-2018 | CN | 108886276 A | 23-11-2018 |
| | | JP | 6692896 B2 | 13-05-2020 |
| | | JP WO2017175330 A1 | | 30-08-2018 |
| | | US | 2019089215 A1 | 21-03-2019 |
| | | WO | 2017175330 A1 | 12-10-2017 |

EPO FORM P0459

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022019074 A